Europäisches Patentamt

European Patent Office

Office européen des brevets

(19)

(11) Veröffentlichungsnummer: **0 008 679**
**B1**

(12) **EUROPÄISCHE PATENTSCHRIFT**

(45) Veröffentlichungstag der Patentschrift: 09.03.83

(51) Int. Cl.³: **B 29 D 7/24**.

(21) Anmeldenummer: **79102745.1**

(22) Anmeldetag: **01.08.79**

(54) Verfahren zur Herstellung einer Polyesterfolie.

(30) Priorität: **07.08.78 JP 95415/78**

(43) Veröffentlichungstag der Anmeldung:
**19.03.80 Patentblatt 80/6**

(45) Bekanntmachung des Hinweises auf die Patenterteilung:
**09.03.83 Patentblatt 83/10**

(84) Benannte Vertragsstaaten:
**DE FR GB LU NL**

(56) Entgegenhaltungen:
**CH - A - 367 321**
**CH - A - 413 347**
**DE - A - 1 404 479**
**DE - B - 1 215 908**
**DE - B - 1 404 397**
**DE - B - 1 504 502**
**JP - A - 75 133 276**
**US - A - 2 884 663**
**US - A - 3 088 173**

(73) Patentinhaber: **TORAY INDUSTRIES, INC.**
**2, Nihonbashi-Muromachi 2-chome Chuo-ku**
**Tokyo 103 (JP)**

(72) Erfinder: **Motegi, Masahiko**
**1040-33 Nishi-imacho**
**Hikone-shi, Shiga-ken (JP)**
Erfinder: **Tanaka, Kazuhiro**
**2-13-1 Sonoyama**
**Otsu-shi, Shiga-ken (JP)**
Erfinder: **Fujita, Saburo**
**2-15 Sonoyama**
**Otsu-shi, Shiga-ken (JP)**

(74) Vertreter: **Wettlauffer, Willy, Dr. et al,**
**Kalle Niederlassung der Hoechst AG**
**Rheingaustrasse 190 Postfach 3540**
**D-6200 Wiesbaden 1 (DE)**

Courier Press, Leamington Spa, England.

EP 0 008 679 B1

## Verfahren zur Herstellung einer Polyesterfolie

Die Erfindung betrifft ein Verfahren zur Herstellung einer Polyesterfolie, deren mechanische Eigenschaften nicht nur in einer, sondern in beiden Streckrichtungen verbessert sind, wobei man eine in Längsrichtung (im folgenden MD genannt) und in Querrichtung (im folgenden TD genannt) um jeweils mindestens dans Zweifache gestreckte Polyesterfolie in Längs- und Querrichtung nachstreckt.

Biaxial gestreckte Polyesterfolien, z.B. Folien aus Polyäthylenterephthalat (PET), werden u.a. wegen ihrer ausgezeichneten thermischen Stabilität und Maßbeständigkeit und wegen ihrer guten mechanischen Eigenschaften auf sehr vielen Gebieten angewendet. So eignen sie sich beispielsweise besonders zur Herstellung von Kondensatoren oder zur Verwendung als Trägerfolien für Magnetbänder. Je besser die mechanischen Eigenschaften sind, desto dünner kann eine Folie für Magnetbänder, Kondensatoren usw. sein, und die Geräte, in denen sie eingesetzt wird, können kleiner und leichter gebaut werden, oder sie können bei gleicher Größe eine wesentliche höhere Leistung erbringen.

Als dünne Trägerfolie ist bereits eine PET-Folie mit hoher Zugfestigkeit in Längsrichtung im Einsatz. Zur Herstellung dieser Folie wird eine normale biaxial gestreckte Folie in MD nachgestreckt. Eine Folie mit hoher Zugfestigkeit nur in MD hat jedoch den Nachteil, daß die Rollenausbildung beim Aufwickeln schlecht ist, da leicht Falten in Längsrichtung auftreten.

Durch die Ständigen Fortschritte auf dem Gebiet der Informationstechnologie wird eine dünnere Trägerfolie immer dringender erforderlich. Eine solche dünnere Folie muß verbesserte mechanische Eigenschaften in MD und TD haben. Höhere mechanische Werte nur in MD reichen nicht aus. Eine gewöhnliche biaxial gestreckte Polyesterfolie hat F-5-Werte (Zugfestigkeit bei 5% Dehnung) in TD von 10 bis 11 kg/mm² . Eine Tensilized-Folie weist in MD eine hohe Zugfestigkeit auf, wogegen ihr F-5-Wert in TD nur 9 bis 11 kg/mm² beträgt, und je dünner die Folie wird, desto schlechter wird sie.

In der JP—A—75 133276 mit der Priorität JP 39808/1974 wurde bereits ein Verfahren zur Herstellung einer in MD und TD festeren Polyesterfolie vorgeschlagen, bei dem die in Längsrichtung nachgestreckte biaxial gestreckte Polyesterfolie zusätzlich in TD nachgestreckt wird. Dabei bestand jedoch noch das Problem der Schrumpfung und Einschnürung in TD beim Nachstrecken der biaxial gestreckten Folie in MD im normalen Walzensystem, da die Folie dabei in TD nicht gehalten wird.

Es stellte sich somit die Aufgabe, ein Verfahren zur Herstellung einer Polyesterfolie mit einem F-5-Mindestwert in TD von mehr als 14 kg/mm², bei hoher Ausbeute und mit wenigen Folienabrissen während der Produktion zu schaffen.

Gelöst wird die genannte Aufgabe bei einem Verfahren, bei welchem man eine in Längs- und Querrichtung um jeweils mindestens das Zweifache gestreckte Polyesterfolie in Längs- und Querrichtung nachstreckt, dadurch, daß man vor der Längs- nachstreckung die biaxial gestreckte Folie thermofixiert und nach der Quernachstreckung erneut thermofixiert, daß die Längs- und Quernachstreckung um das 1,05- bis 2,5-fache bei einer Temperatur $T_s$ zwischen $T_g+10°C$ ($T_g$=Glasübergangstemperatur des Polyesters) und $T_m-40°C$ ($T_m$=Schmelzpunkt des Polyesters) erfolgt und daß die Nachthermofixierung bei einer Temperatur, welche höher als $T_s$ ist und zwischen $T_g+50°C$ und $T_m-10°C$ liegt, durchgeführt wird.

Der mitwesentliche Punkt der Erfindung besteht darin, daß die biaxial gestreckte Polyesterfolie vor dem anschließenden Nachstrecken in MD und TD thermofixiert wird, um den Festigkeitsverlust der Folie während des Streckens auf ein Mindestmaß zu begrenzen, ein leistungsfähiges Strecken zu erreichen und der Folie einen F-5-Mindestwert in TD von mehr als 14 kg/mm² zu verleihen. Das Thermofixieren vor dem Nachstrecken festigt das Orientierungsgefüge des Polymeren, wodurch ein Zurückgehen der Orientierung wirksam verhindert und die erfolgreiche Herstellung einer in MD und TD festeren Folie ermöglicht wird.

Bei der nach dem erfindungsgemäßen Verfahren hergestellten Folie liegt der F-5-Mindestwert in TD über 14 kg/mm². Mit steigendem F-5-Wert wird die Rollenausbildung beim Aufwickeln besser, die Handhabung bei der Herstellung von Magnetbändern oder Kondensatoren aus dieser Folie wird leichter, und die Eigenschaften der daraus hergestellten Erzeugnisse, z.B. das Laufverhalten von Magnetbändern, werden besser.

Die nach diesem Verfahren hergestellte Polyesterfolie hat einen hohen F-5-Wert von insbesondere über 15,5 kg/mm² und vorzugsweise über 18 kg/mm². Im Vergleich mit den Folien des Standes der Technik wird der Unterschied in den Folieneigenschaften, z.B. bei der Rollenausbildung, ganz offensichtlich.

Ein derartig hoher F-5-Wert kann nicht allein durch einfaches Strecken erzielt werden. Dazu müssen besondere Bedingungen eingehalten werden. Wir bezeichnen hier die Streckverhältnisse beim ersten MD- und TD-Strecken der ursprünglichen biaxial gestreckten Polyesterfolie mit A und B und die Streckverhältnisse beim zweiten MD- und TD-Nachstrecken mit A' und B'. Die Bedingung soll derart eingehalten werden, daß die Produkte aus (A×A') und (B×B') beide etwa 4,0, vorzugsweise über 4,5 und noch besser über 5,0 betragen. Ganz besonders bevorzugt werden Produkte über 5,5.

Die nach dem erfindungsgemäßen Verfahren hergestellte Folie weist also eine charakteristische Beziehung von mindestens $A \times A' \cong B \times B' = 4,0$ und ganz besonders bevorzugt von $A \times A' \cong B \times B' > 5,5$ auf.

Die biaxial gestreckte Folie zum weiteren Verstrecken erhält man dabei durch Strecken einer Folie zunächst in MD und dann in TD oder durch Simultanstrecken einer Folie in MD und TD oder durch Strecken einer Folie in MD, dann in TD und schließlich noch einmal in MD usw.

Beim Verfahren mit aufeinanderfolgendem Strecken in MD-TD oder TD-MD wird die im wesentlichen amorphe Polyesterfolie bei einer Temperatur zwischen $T_g$ und $T_g + 60°C$, vorzugsweise zwischen $T_g + 10°C$ und $T_g + 40°C$ zunächst in einer Richtung um mehr als das 2,0-fache, insbesondere um das 2,0- bis 6,0-fache, bevorzugt um das 2,5- bis 5,0-fache gestreckt; anschließend wird diese Folie bei einer Temperatur zwischen $T_g$ und $T_g + 80°C$, vorzugsweise zwischen $T_g + 10°C$ und $T_g + 60°C$ im rechten Winkel zur ersten Richtung um mehr als das 2,0-fache, insbesondere um das 2,0- bis 6,0-fache, bevorzugt um das 2,5- bis 5,5-fache gestreckt.

Beim Simultanstreckverfahren wird die im wesentlichen amorphe Polyesterfolie bei einer Temperatur zwischen $T_g$ und $T_g + 80°C$ vorzugsweise zwischen $T_g + 10°C$ und $T_g + 60°C$ in MD und TD gleichzeitig um mehr als das 2,0-fache, insbesondere um das 2,0- bis 5,0-fache, bevorzugt um das 2,5- bis 4,5-fache gestreckt (das MD/TD-Streckverhältnis wird genau bestimmt). Die aufeinanderfolgend in MD-TD gestreckte Folie ist jedoch am besten geeignet.

Bei der Thermofixierbehandlung ist ein Spannrahmensystem, bei dem die Folie durch Kluppen gehalten wird, günstiger als ein Walzensystem. Die biaxial gestreckte Folie wird bei einer Temperatur thermofixiert, die höher ist als die MD- und TD-Strecktemperatur und $T_s$ (Nachstrecktemperatur) und niedriger als $T_m - 10°C$, insbesondere liegt die Temperatur zwischen $T_s + 5°C$ und $T_m - 20°C$, vorzugsweise zwischen $T_s + 10°C$ und $T_m - 30°C$.

Ganz besonders bevorzugt ist eine Thermofixiertemperatur, die höher ist als die TD-Nachstrecktemperatur. Es ist günstiger, die Folie in gespanntem Zustand zu thermofixieren, erforderlichenfalls kann sie jedoch auch in entspanntem Zustand thermofixiert werden.

Beim Nachstrecken in MD und TD liegt die Temperatur zwischen $T_g + 10°C$ und $T_m - 40°C$. Wird diese Bedingung nicht eingehalten, kommt es zu Abrissen der Folie oder zu einem ungleichförmigen Strecken, da sich das Streckverhalten der Folie sehr verschlechtert.

Vorzugsweise liegt die Strecktemperatur im Bereich von $T_g + 40°C$ und $T_m - 60°C$, wobei die Temperatur beim Nachstrecken in TD höher sein soll als die Temperatur beim Nachstrecken in MD. Das Streckverhältnis beim Nachstrecken in MD und TD liegt zwischen 1,05 und 2,5 und richtet sich nach dem Zustand der Orientierung der ursprünglichen biaxial gestrecken Folie. Es ist jedoch auf jeden Fall so, daß sich kein Nachstreckeffekt zeigt, wenn das Nachstreickverhältnis unter 1,05 liegt, und daß es extrem häufig zu Folienabrissen kommt, wenn das Verhältnis über 2,5 liegt.

Vorzugsweise liegt das Nachstreckverhältnis zwischen 1,2 und 2,0.

Für das MD- und TD-Nachstrecken können die üblichen Walzenstreck- und Spannrahmenstrecksysteme angewendet werden, wobei die Folie je nach Einzelfall verdickte oder gefaltete Kanten haben kann oder kantenlos sein kann.

Es ist angebracht, die in MD nachgestreckte Folie vor dem Nachstrecken in TD bei einer Temperatur zwischen der Nachstrecktemperatur in MD und TD und $T_m - 10°C$ zu thermofixieren, da aud diese Weise verhindert wird, daß die in MD nachgestreckte Folie in ihrer Orientierung zurückgeht.

Ein Spannrahmensystem, bei dem die Folie durch Kluppen gehalten wird, ist für das Nachthermofixieren besser geeignet als ein Walzensystem. Beim Nachthermofixieren soll die Temperatur zwischen $T_g + 50°C$ und $T_m - 10°C$ liegen, vorzugsweise liegt sie um mehr als 10°C über den MD- und TD-Nachstrecktemperaturen und zwischen $T_g + 80°C$ und $T_m - 20°C$. Bevorzugt wird die nachgestreckte Folie in gespanntem Zustand nachthermofixiert, zur Erhöhung der Maßbeständigkeit kann sie jedoch auch in entspanntem Zustand thermofixiert werden.

Die nach dem beschriebenen Verfahren hergestellte Polyesterfolie weist beim Aufwickeln eine gute Rollenausbildung auf, weil dabei keine oder nur äußerst wenig Falten in Längsrichtung oder andere Fehler auftreten. Ferner hat diese Polyesterfolie sowohl in MD als auch in TD verbesserte mechanische Eigenschaften. Sie ist insbesondere z.B. als Trägerfolie für Video-Langspielbänder oder zur Herstellung von Kondensatoren geeignet, für die Trägerfolien in Dicken unter 10 $\mu$m benötigt werden.

Für eine nach diesem Verfahren hergestellte Folie eignen sich vor allem Polyäthylenterephthalat oder Polyäthylen-2,6-naphthalat. Das Verfahren kann auch mit Polyester-Mischpolymerisaten mit mehr als 70 Gew.-% Polyäthylenterephthalat und mit Polymerisatmischungen, bei denen die Merkmale des Polyäthylenterephthalats nicht verloren gehen, angewendet werden. Die bevorzugte Grenzviskosität des Polymeren (Staudinger-Index) beträgt 0,5 bis 1,0, vorzugsweise 0,64 bis 0,90.

Die Glasübergangstemperatur ($T_g$) entspricht der Temperatur am Wendepunkt der Kurve spezifisches Volumen/Temperatur, die man durch Erhitzen einer unverstreckten Folie bei einer Aufheizgeschwindigkeit von 5°C/min in einem Dilatometer erhält. Der Schmelzpunkt ($T_m$) ist die Spitzentemperatur der durch Kalorimetrie mit differentieller Abtastung (DSC) bei einer Aufheizgeschwindigkeit von 10°C/min ermittelten Schmelzkurve.

Die Erfindung wird durch die folgenden Beispiele näher erläutert.

Beispiele 1 bis 4 und Kontrollbeispiele A, B, C

Eine Polyäthylenterephthalat-Schmelze mit einer Temperatur von 280°C und einer Intrinsic-Viskosität von 0,70 wurde auf eine Kühltrommel zu einer im wesentlichen amorphen Folie extrudiert. Die Intrinsic-Viskosität dieser Folie betrug 0,68. Die Folie wurde bei einer Temperatur von 80°C in MD um das 3,5-fache gestreckt; dabei wurde mit unterschiedlichen Geschwindigkeiten von zwei Walzenpaaren gearbeitet, Anschließend wurde bei einer Temperatur von 100°C im Streckrahmen um das 3,5-fache in TD gestreckt. Die Folie wurde dann bei einer der in Tabelle 1 angegebenen Temperaturen in gespanntem Zustand thermofixiert, danach mittels Walzen bei einer Temperatur von 135°C um das 1,5-fache in MD nachgestreckt und bei 150°C in einem Streckrahmen um das 1,6-fache in TD nachgestreckt. Abschließend wurde sie in gespanntem Zustand bei einer Temperatur von 200°C thermofixiert. Die fertige Folie hatte eine Dicke von 5 $\mu$m.

Die Tabelle 1 zeigt im Vergleich mit den Kontrollbeispielen A bis C, daß durch das Thermofixieren der Folie bei einer Temperatur, die über der Temperatur beim Nachstrecken in MD liegt, ein Zurückgehen der Folienorientierung beim Nachstreckvorgang verhindert wird. Dadurch wird zuverlässig eine sehr feste Folie, sowohl in MD als auch in TD erhalten.

Kontrollbeispiele D, E, F

Das Kontrollbeispiel D betrifft eine gewöhnliche biaxial gestreckte Folie, die durch Strecken einer im wesentlichen amorphen Vorfolie bei 80°C um das 4-fache in MD, und bei 100°C um das 4,2-fache in TD und anschließendes Thermofixieren bei 200°C hergestellt wurde, Wie aus Tabelle 2 hervorgeht, wurden gute mechanische Eigenschaften nicht erzielt.

Die Folie Gemäß Kontrollbeispiel E wurde durch Simultanstrecken einer im wesentlichen amorphen Vorfolie um das 5,0-fache ihrer Abmessungen in MD und TD bei 85°C in einem Simultanstreckrahmen hergestellt. Obwohl das Folienstreckverhältnis insgesamt geringer war. als in den Beispielen 1 bis 3, kam es sehr häufig zu Folienabrissen. Die Daten zeigen, daß die vorliegende Erfindung nicht nur zu einer besseren Folie, sondern auch au einem einfachen Streckverfahren führt.

Die Folie in Kontrollbeispiel F ist eine gewöhnliche Folie mit hoher Zugfestigkeit, die durch Strecken einer Folie in der Reihenfolge MD, TD und Nachstrecken in MD hergestellt wurde. Im Unterschied zu Beispiel 1 wurde bei Kontrollbeispiel F nicht in TD nachgestreckt. Die mechanischen Eigenschaften in TD sind nicht ausreichend, und die Rollenausbildung ist nicht so gut.

Beispiele 5 bis 9, Kontrollbeispiel G

Das Verfahren wurde wie in Beispiel 4 durchgeführt, jedoch mit dem Unterschied, daß das Streckverhältnis beim ersten MD-Strecken 2,5 betrug und das Nachstreckverhältnis in MD wie in Tabelle 3 angegeben eingehalten wurde. Nur in Beispiel 8 wurde das Zweistufen-MD-Streckverfahren angewendet, d.h. die gegossene Vorfolie wurde zunächst um das 1,5-fache ihrer Abmessungen bei 120°C MD-gestreckt und anschließend bei 80°C noch einmal um das 2,5-fache MD-gestreckt. In jedem Beispiel waren die Folieneigenschaften gut. Kontrollbeispiel G zeigt, daß es bei einem MD-Nachstreckverhältnis von mehr als 2,5 sehr häufig zu Folienabrissen kommt.

In Beispiel 9 wurde das Verfahren von Beispiel 5 wiederholt, mit dem Unterschied, daß der Thermofixiervorgang bei 200°C zwischen dem MD-Nachstrecken und dem TD-Nachstrecken durchgeführt wurde. Der Vergleich mit Beispiel 5 ließ erkennen, daß der Thermofixiervorgang die mechanischen Eigenschaften der Folie steigerte. Die Folie wurde mit einer Magnetschicht aus $\gamma$-Eisenoxid und einem Bindemittel in einer Dicke von 3,5 $\mu$m beschichtet.

Die Laufeigenschaften von 1,27 cm (1/2 Zoll) breiten und 200 m langen Magnetbändern wurden durch Abspielen in einem Videobandgerät beurteilt. Dazu wurden der Zustand der normalen Wiedergabe, das Abspulen und das Zurückspulen und der Dauerbetrieb während 500 Wiedergaben begutachtet. Die Beurteilungsmaßstäbe sind wie folgt dargestellt:

⊙ sehr gut
O gut
Δ mäßig
x sehr schlecht

TABELLE 1

| | | Thermo-fixier-temp (°C) | F-5 Werte (kg/mm$^2$) | | Filmabrisse (pro 9.000 m) | Rollenaus-bildung | Laufeigen-schaften |
|---|---|---|---|---|---|---|---|
| | | | MD | TD | | | |
| Vergleichs-beispiel | A | — | 13,0 | 13,1 | o | O | Δ |
| | B | 100 | 12,8 | 13,2 | o | O | Δ |
| | C | 130 | 13,5 | 13,5 | o | O | Δ |
| Beispiel | 1 | 140 | 14,4 | 14,6 | o | O | O |
| | 2 | 160 | 16,7 | 15,8 | o | O | O∼⊚ |
| | 3 | 180 | 17,8 | 17,0 | o | O | O∼⊚ |
| | 4 | 200 | 18,3 | 18,9 | o | O | ⊙ |

TABELLE 2

| | | Streckmethode | F-5 Werte (kg/mm$^2$) | | Filmabrisse (pro 9.000 m) | Rollen-ausbildung | Laufeigen-schaften |
|---|---|---|---|---|---|---|---|
| | | | MD | TD | | | |
| Vergleichs-beispiele | D | MD-TD stufen-weise Streckung | 11,8 | 12,0 | 0 | Δ | x |
| | E | MD-TD Simultan-streckung | 14,8 | 13,9 | 11 | x Film reißt ab | — |
| | F | MD-TD-Nach-MD-streckung | 18,0 | 9,8 | 0 | Δ | x |

TABELLE 3

| | | Nach-MD-Streck-verhältnis | F-5 Werte (kg/mm$^2$) | | Filmabrisse (pro 9.000 m) | Rollenausbildung |
|---|---|---|---|---|---|---|
| | | | MD | TD | | |
| Beispiel | 5 | 1,5 | 16,5 | 18,8 | 0 | O |
| | 6 | 2,0 | 18,3 | 18,5 | 0 | O |
| | 7 | 2,5 | 20,1 | 18,0 | 1 | O |
| Vergleichs-beispiel | G | 3,0 | 21,1 | 17,0 | 30 | Film reißt ab |
| Beipiel | 8 | 1,5 | 17,3 | 19,0 | 0 | O |
| | 9 | 1,5 | 18,5 | 20,0 | 0 | O |

**Patentansprüche**

1. Verfahren zur Herstellung einer Polyesterfolie, die einen F-5-Wert von mehr als 14 kg/mm$^2$ in Querrichtung (TD) aufweist, wobei man eine in Längs- und Querrichtung (MD; TD) um jeweils mindestens das Zweifache gestreckte Polyesterfolie in Längs- und Querrichtung nachstreckt, dadurch gekennzeichnet, daß man vor der Längsnachstreckung die biaxial gestreckte Folie thermofixiert und nach der Quernachstreckung erneut thermofixiert, wobei die Längs' und Quernachstreckung um das 1,05- bis 2,5-fache bei einer Temperatur $(T_s)$ zwischen $T_g+10°C$ ($T_g$=Glasübergangs-temperatur des Polyesters) und $T_m-40°C$ ($T_m$=Schmelzpunkt des Polyesters) erfolgt und die Nachthermofixierung bei einer Temperatur, welche höher als $T_s$ ist und zwischen $T_g+50°C$ und $T_m-10°C$ liegt, durchführt.

2. Verfahren nach Anspruch 1, dadurch gekennzeichnet, daß man eine im wesentlichen amorphe Polyestervorfolie um das 2,0- bis 6,0-fache in einer Richtung bei einer Temperatur zwischen $T_g$ und $T_g+60°C$ und anschließend um das 2,0- bis 6,0-fache senkrecht zur ersten Richtung bei einer Temperatur zwischen $T_g$ und $T_g+80°C$ streckt.

3. Verfahren nach Anspruch, dadurch gekennzeichnet, daß man eine im wesentlichen amorphe Polyestervorfolie simultan in MD und TD um das 2,0- bis 5,0-fache bei einer Temperatur zwischen $T_g$ und $T_g+80°C$ streckt.

4. Verfahren nach einem der Ansprüche 1 bis 3, dadurch gekennzeichnet, daß man die Streckverhältnisse so einstellt, daß das Produkt aus dem ersten und dem zweiten Streckverhältnis sowohl in MD als auch in TD mehr als das 4,0-fache beträgt.

5. Verfahren nach einem der Ansprüche 1, 2 und 4, dadurch gekennzeichnet, daß man die Temperatur ($T_s$) beim Nachstrecken in TD höher einstellt als die Temperatur beim Nachstrecken in MD.

6. Verfahren nach einem der Ansprüche 1 bis 5, dadurch gekennzeichnet, daß man als Polyester Polyäthylenterephthalat oder Polyäthylen-2,6-naphthalat verwendet.

7. Verfahren nach einem der Ansprüche 1 bis 6, dadurch gekennzeichnet, daß der Staudinger-Index des Polyesters 0,5 bis 1,0 beträgt.

8. Verfahren nach einem der Ansprüche 1, 2 und 4 bis 7, dadurch gekennzeichnet, daß man vor dem Nachstreckvorgang in TD bei einer Temperatur über den Nachstrecktemperaturen ($T_s$) in MD und TD und unter $T_m-10°C$ thermofixiert.

## Revendications

1. Procédé pour la fabrication d'une feuille de polyester, présentant un indice F-5 supérieur à 14 kg/mm² en direction transversale (TD), dans lequel on soumet une feuille de polyester étirée jusqu'à au moins 2 fois ses dimensions initiales tant en direction longitudinale que transversale (MD; TD) à un post-allongement tant en direction longitudinale que transversale, caractérisé en ce que l'on soumet la feuille biaxialement étirée à une première thermofixation avant le post-allongement en direction longitudinale et à une seconde thermofixation après le post-allongement en direction transversale, les post-allongements en directions longitudinale et transversale s'effectuant jus-qu'à entre 1,05 et 2,5 fois ses dimensions initiales à une température ($T_s$) comprise entre $T_g+10°C$ ($T_g$=température de transition vitreuse du polyester) et $T_m-40°C$ ($T_m$=point de fusion du polyester) et la thermofixation s'effectuant à une température supérieure à $T_s$ et comprise entre $T_g+50°C$ et $T_m-10°C$.

2. Procédé selon la revendication 1 caractérisé en ce que l'on étire une préfeuille de polyester essentiellement amorphe jusqu'à entre 2,0 et 6,0 fois sa dimension en une direction à une température comprise entra $T_g$ et $T_g+60°C$ et ensuite jusqu'à entre 2,0 et 6,0 fois sa dimension perpendiculairement à sa première direction, à une température comprise entre $T_g$ et $T_g+80°C$.

3. Procédé selon la revendication 1, caractérisé en ce que l'on étire une préfeuille de polyester essentiellement amorphe simultanément en MD et en TD jusqu'à entre 2,0 et 5= fois ses dimensions à une température comprise entre $T_g$ et $T_g+80°C$.

4. Procédé selon l'une des revendications 1 à 3, caractérisé en ce que l'on ajuste les rapports d'étirage de telle façon que le produit du premier et du second rapport d'étirage, tant en MD qu'en TD, soit supérieur au facteur 4,0.

5. Procédé selon l'une des revendications 1, 2 et 4, caractérisé en ce que l'on règle la température ($T_s$) pendant le post-allongement en TD à une valeur plus élevée que la température pendant l'allongement en MD.

6. Procédé selon l'une des revendications 1 à 5 caractérisé en ce que l'on utilise comme polyester du téréphthalate de polyéthylène ou du 2,6-naphthalate de polyéthylène.

7. Procédé selon l'une des revendications 1 à 6 caractérisé en ce que l'indice de Staudinger du polyester est compris entre 0,5 et 1,0.

8. Procédé selon l'une des revendications 1, 2 et 4 à 7, caractérisé en ce que l'on effectue une thermofixation avant le processus de post-allongement en TD à une température supérieure aux températures ($T_s$) d'allongement en MD et en TD et inférieure à $T_m-10°C$.

## Claims

1. Process for the manufacture of a polyester film which has a F-5 value exceeding 14 kg/mm² in the transverse direction (TD), comprising post-stretching in the longitudinal and transverse directions of a polyester film which has been stretched by at least 2 times each in the longitudinal and transverse directions (MD; TD), wherein the biaxially stretched film is heat-set before post-stretching in the longitudinal direction and is again heat-set after post-stretching in the transverse direction, post-stretching in the longitudinal and transverse directions by 1.05 to 2.5 times being effected at a temperature ($T_s$) which ranges between $T_g+10°C$ ($T_g$=glass transition temperature of the polyester) and $T_m-40°C$ ($T_m$=melting point of the polyester) and post heat-setting being carried out at a temperature which exceeds $T_s$ and ranges between $T_g+50°C$ and $T_m-10°C$.

2. A process as claimed in Claim 1, wherein a substantially amorphous polyester pre-film is stretched by 2.0 to 6.0 times in one direction, at a temperature which ranges between $T_g$ and $T_g+60°C$ and is then stretched by 2.0 to 6.0 times perpendicularly to the first direction, at a temperature which ranges between $T_g$ and $T_g+80°C$.

3. A process as claimed in Claim 1, wherein a substantially amorphous polyester pre-film is stretched simultaneously in MD and TD by 2.0 to 5.0 times, at a temperature which ranges between $T_g$ and $T_g+80°C$.

4. A process as claimed in any of Claims 1 to 3, wherein the stretching ratios are adjusted in such a way that the product of the first and second stretching ratios amounts to more than 4.0 in MD and also in TD.

5. A process as claimed in any of Claims 1, 2 and 4, wherein the temperature ($T_s$) during post-stretching in TD is adjusted to a higher level than the temperature during post-stretching in MD.

6. A process as claimed in any of Claims 1 to 5, wherein polyethylene terephthalate or polyethylene-2,6-naphthalate is used as the polyester.

7. A process as claimed in any of Claims 1 to 6, wherein the Staudinger index of the polyester ranges from 0.5 to 1.0.

8. A process as claimed in any of Claims 1 and 2 and 4 to 7, wherein heat-setting at a temperature which is higher than the temperatures ($T_s$) during post-stretching in MD and TD and lower than $T_m$-10°C is carried out before the post-stretching operation in TD.